# EUROPÄISCHE PATENTSCHRIFT

(11) **EP 2 951 333 B1**
(45) Veröffentlichungstag und Bekanntmachung des Hinweises auf die Patenterteilung: **23.05.2018**
(21) Anmeldenummer: 14703552.1
(22) Anmeldetag: 23.01.2014
(51) Int. Cl.: C23C 24/08, C22C 9/02, F16C 33/12, C23C 28/00, C23C 28/02

(54) **METALLISCHER GLEITLAGERVERBUNDWERKSTOFF MIT EINER METALLISCHEN STÜTZSCHICHT**
METALLIC COMPOSITE MATERIAL FOR A SLIDING BEARING COMPRISING A METALLIC SUPPORT LAYER
MATÉRIAU COMPOSITE MÉTALLIQUE POUR PALIERS LISSES COMPRENANT UNE COUCHE SUPPORT MÉTALLIQUE

(30) Priorität: 01.02.2013 DE 102013201720
(43) Veröffentlichungstag der Anmeldung: 09.12.2015
(73) Patentinhaber: KS Gleitlager GmbH, 68789 St. Leon-Rot (DE)
(72) Erfinder: PUCHER, Dr. Klaus, 86157 Augsburg (DE); SCHUBERT, Werner, 69168 Wiesloch (DE)
(74) Vertreter: DREISS Patentanwälte PartG mbB
(86) Internationale Anmeldenummer: PCT/EP2014/051280
(87) Internationale Veröffentlichungsnummer: WO 2014/118067

(56) Entgegenhaltungen:
- DE-B3-102006 019 826
- DE-C1- 10 062 876
- GB-A- 2 360 294
- US-A1- 2003 196 736

## Beschreibung

Die Erfindung betrifft einen metallischen Gleitlagerverbundwerkstoff mit einer metallischen Stützschicht, insbesondere aus Stahl, und mit einer Lagermetallschicht auf Kupfer-Zinn-Basis mit 2 - 6 Gew.-% Zinn. Derartige Gleitlagerverbundwerkstoffe werden zur Herstellung von Gleitlagerelementen, insbesondere Gleitlagerschalen und Gleitlagerbuchsen für motorische oder motorennahe Anwendungen eingesetzt. Typische Anwendungen der hier in Rede stehenden Art sind Hauptlagerschalen und Pleuellagerschalen. Pleuellagerbuchsen zur Lagerung eines Kolbenbolzens bei Verbrennungsmotoren sind dagegen häufig als Monometallbuchsen ausgebildet.

Es sind Gleitlagerverbundwerkstoffe mit einer Lagermetallschicht aus CuSn4, insbesondere CuSn4Pb, und aus CuSn5Zn bekannt. Des Weiteren sind Legierungen auf Kupfer-Zinn-Basis bekannt, bei denen durch Zugabe von Nickel intermetallische SnNi-Phasen gebildet werden. Durch sogenannte spinodale Härtung lassen sich Lagermetalle herstellen, die für eine stoßende oder schlagende Belastung ausgelegt sind, die typischerweise bei Kolbenbolzenbuchsen auftritt. Hierfür werden typischerweise hohe Zinngehalte und hohe Nickelgehalte verwendet, insbesondere in Form der Legierung CuSn9Ni15 oder CuSn6Ni6.

GB 2 360 294 A offenbart einen Gleitlagerverbundwerkstoff mit den Merkmalen des Oberbegriffs des Anspruchs 1, wobei der Lagermetallschicht Hartstoffe zugesetzt sind. DE 10 2006 019 826 B3 offenbart Gleitlagerverbundwerkstoffe mit weiten Bereichsgrenzen für Nickel und Zinn, nämlich 1,0 bis 15,0 Gew.-% und 2,0 bis 12,0 Gew.-% Zinn. Die Ausführungsbeispiele offenbaren jedoch hohe Zinn- und Nickelanteile von 5,2 bis 5,6 Gew.-% Zinn und 5,6 bis 6,0 Gew.-% Nickel. Es wird hierdurch versucht, eine spinodale Härtung herbeizuführen. Durch eine Wärmebehandlung von 300 bis 500° C werden Härten der Lagermetallschicht von vermutlich über 170 HBW 1/30/10 erzielt. DE 100 62 876 C1 betrifft eine Pleuellagerschale für ein Titanpleuel, wobei auf der Außenseite des Stahlrückens der Lagerschale eine CuSn(4-8)-Schicht vorgesehen ist, die jeweils bis 0,3 % Nickel und Zink enthalten kann. Sofern ein beidseits verkupferter Stahlrücken verwendet wird, ist die CuSn(4-8)-Schicht auch auf der dem Reibpartner zugewandte Seite des Stahlrückens vorgesehen. US 2003/0196736 A1 offenbart eine Gusslegierung auf Bronzebasis mit 3-4 Gew.-% Zinn, 0,5-1 Gew.-% Nickel, 0,05-5 Gew.-% Zink und höchstens 0,1 Gew.-% Silber.

AT 509 459 zeigt eine kupferbasierte Antifrettingschicht auf einer der Lagermetallschicht gegenüberliegenden und einem Gehäuse zugewandten Seite eines Gleitlagerverbundwerkstoffs. Der Summenanteil von Legierungsbestandteilen Germanium, Zinn, Indium, Zink, Nickel, Kobalt, Bismut, Blei, Silber, Antimon sowie herstellungsbedingten Verunreinigungen beträgt 1 - 30 Gew.%. Die Antifrettingschicht kann insbesondere 5 - 25 Gew.-% Zinn und 0,2 - 8 Gew.-% Nickel umfassen.

Der vorliegenden Erfindung liegt die Aufgabe zugrunde, einen metallischen Gleitlagerverbundwerkstoff der eingangs beschriebenen Art dahingehend weiterzuentwickeln, dass seine tribologischen Eigenschaften in Richtung Anpassbarkeit und Partikelverträglichkeit auch bei hohen Gleitgeschwindigkeiten verbessert werden. Es soll eine hohe Bruchdehnung realisiert werden.

Diese Aufgabe durch einen Gleitlagerverbundwerkstoff mit den Merkmalen des Anspruchs 1 gelöst.

Mit der vorliegenden Erfindung wird davon Abstand genommen, hohe Zinn- und Nickelgehalte mit dem Ziel einer hohen Härte und damit einer hohen Belastbarkeit einzusetzen. Es wird erfindungsgemäß vielmehr vorgeschlagen, niedrige bis moderate Zinngehalte in Verbindung mit außergewöhnlich niedrigen Nickelgehalten einzusetzen. Hierdurch wurde die Anpassbarkeit und Partikelverträglichkeit, die gerade bei Anwendungen als Hauptlagerschale oder Pleuellagerschale bei hohen Gleitgeschwindigkeiten eine große Bedeutung haben, wesentlich verbessert im Vergleich zu hochnickelhaltigen Lagerlegierungen. Des Weiteren wurde überraschenderweise festgestellt, dass mit einer Nickelzugabe im beanspruchten Bereich von nur 0,2 bis 2 Gew.-% dennoch eine Erhöhung der Bruchdehnung um einen Faktor von 2 bis 3 erzielt werden kann, verglichen mit einer nickelfreien Kupfer-Zinn-Bronze. Der Zinngehalt beträgt vorteilhafterweise wenigstens das Vierfache des Nickelgehalts.

In Weiterbildung der Erfindung erweist es sich als vorteilhaft, wenn die Lagermetallschicht 0,2 - 1,5 Gew.-%, insbesondere 0,2 - 1,0 Gew.-%, insbesondere 0,2 - 0,9 Gew.-%, insbesondere 0,4 - 0,9 Gew.-%, insbesondere 0,4 - 0,8 Gew.-% Nickel umfasst.

Hinsichtlich des Zinngehalts wird es als vorteilhaft angesehen, wenn die Lagermetallschicht 2,0 - 5,5 Gew.-%, insbesondere 3,0 - 5,5 Gew.-%, insbesondere 3,5 - 5,5 Gew.-%, insbesondere 3,5 - 5,0 Gew.-% und weiter insbesondere 4,0 - 5,0 Gew.-% Zinn umfasst.

Die Zugabe von Silber verbessert die Sintereigenschaften, d.h. der Sinterprozess läuft stabiler ab und reagiert weniger auf Temperaturschwankungen. Die Zugabe von Zink erhöht die Korrosionsbeständigkeit und die Stabilität gegen aggressive Öle.

Eine bevorzugte Lagermetallschicht ist von einer
CuSn4,5Zn0,8Ni0,6Ag0,4-Legierung gebildet.

Des Weiteren erweist es sich als vorteilhaft, wenn die Lagermetallschicht eine Sinterschicht ist und aus sphärischen bis knollenförmigen Partikeln gebildet ist. Wenn vorstehend von sphärischen bis knollenförmigen Partikeln die Rede ist, so werden hierunter solche Partikel verstanden, die eine überwiegend verrundete Geometrie ohne scharfe, spitze, bizarre oder spratzige Gestalt aufweisen.

Im Zuge des Aufsinterns der Partikel wird vorteilhafterweise eine Verdichtung ausgeführt, so dass die Porosität der entstehenden Lagermetallschicht höchstens 2 %, vorteilhafterweise höchstens 1 % beträgt. Sie wird bestimmt, indem ein Schliff einer Querschnittsfläche angefertigt wird, wobei der Querschnitt senkrecht zur flächenhaften Erstreckung des Gleitlagerverbundwerkstoffs verläuft. Diese Querschnittsfläche wird dann optisch ausgewertet, um die Porosität zu ermitteln.

Zur weiteren Herstellung bzw. strukturellen Ausbildung des Gleitlagerverbundwerkstoffs wird vorgeschlagen, dass nach der Herstellung des Schichtverbunds eine Umformbehandlung durch Walzen und daran anschließend eine Wärmebehandlung zwischen 450° und 520° C ausgeführt wird. Im Zuge der Umformung durch Walzen wird der Gleitlagerverbundwerkstoff verfestigt. Es wird hier im Bereich von Umformgraden von 5 bis 25 %, insbesondere im Bereich von 10 bis 25 % und von 15 bis 25 % gearbeitet. Hierbei wird in erwünschter Weise eine Aufhärtung der Stützschicht auf Werte von wenigstens 140 HBW 1/30/10 erzielt. - Die Angabe 1/30/10 bedeutet, dass die Härte mit einem Kugeldurchmesser von 1 mm, einem Belastungsgrad von 30 kg und während einer Belastungsdauer von 10 s nach dem üblichen HBW-Härtemessverfahren bestimmt wurde. Die Härte wird durch Aufbringen einer Prüfkraft senkrecht auf die flächenhafte Erstreckung des Gleitlagerverbundwerkstoffs bei der Lagermetallschicht ermittelt.- Im Zuge dieser Walzbehandlung stellt sich aber auch eine Aufhärtung der Lagermetallschicht auf Bronzebasis ein, die für die hier intendierten Verwendungen des Gleitlagerverbundwerkstoffs aber als nachteilig erkannt wurde. Es zeigte sich, dass bei einer erfindungsgemäßen Zusammensetzung des Gleitlagerverbundwerkstoffs durch die genannte Wärmebehandlung im Bereich von 450° und 520°C eine deutliche Herabsetzung der Härte der Lagermetallschicht erreicht werden kann. In vorteilhafter Weise beträgt die Härte der Lagermetallschicht dann zwischen 70 HBW 1/10/10 und 100 HBW 1/10/10. Wenn hiervon ausgehend Lagerelemente durch einen Biegerollvorgang geformt werden, kommt es wiederum zu einer Verfestigung der Lagermetallschicht, die dann aber unterhalb kritischer Grenzen bleibt.

Des Weiteren wird Schutz beansprucht für ein aus einem erfindungsgemäßen Gleitlagerverbundwerkstoff hergestelltes Gleitlagerelement, insbesondere eine Haupt- oder Pleuellagerschale zur Lagerung der Kurbelwelle bzw. zur Lagerung eines Motorenpleuels, insbesondere eines Kraftfahrzeugmotorenpleuels, an einem Kurbelzapfen einer Kurbelwelle.

Ausgehend von einem erfindungsgemäßen Gleitlagerverbundwerkstoff kann in einem Biege-Rollprozess die Formgebung des herzustellenden Gleitlagerelements ausgeführt werden.

Es erweist sich als vorteilhaft, wenn nach der Formgebung des Gleitlagerverbundwerkstoffs zur Bildung des Gleitlagerelements die Härte der Lagermetallschicht des Gleitlagerelements höchstens 160 HBW 1/10/10, insbesondere höchstens 150 HBW 1/10/10, insbesondere höchstens 140 HBW 1/10/10, insbesondere höchstens 130 HBW 1/10/10 und wenigstens 100 HBW 1/10/10, insbesondere wenigstens 110 HBW 1/10/10 beträgt.

Es sei auch darauf hingewiesen, dass der erfindungsgemäße Gleitlagerverbundwerkstoff und hieraus hergestellte Gleitlagerelemente auf der dem Gleitpartner zugewandten Seite der Lagermetallschicht zusätzliche Beschichtungen aufweisen können, die jedoch zur Bestimmung der Härten der Lagermetallschicht abgetragen werden. Als Beschichtungen kommen beispielsweise Sputterschichten einer Schichtdicke von 2-20 µm, insbesondere 6 - 18 µm, auf Aluminiumbasis, insbesondere Aluminium-Zinn-Basis in Frage oder Zinn- oder Zinn-Kupfer-Basislegierungen bzw. Wismut- oder Wismut-Basislegierungen in Frage. Alternativ hierzu können galvanische Beschichtungen einer Schichtdicke von 2 - 20 µm, insbesondere 6 - 18 µm, in Form von Zinn- oder Zinn-Kupfer-Basislegierungen bzw. Wismut- oder Wismut-Basislegierungen vorgesehen sein. Auch ein Gleitlack einer Schichtdicke von 2-20 µm, insbesondere 4 - 15 µm, auf Polymerbasis, insbesondere PAI, mit weiteren tribologisch wirksamen Füllstoffen, wie Graphit, MoS₂, TiO₂, ZnS, hexagonales Bohrnitrid, ist denkbar. Zwischen der Lagermetallschicht und einer solchen Oberflächenbeschichtung kann eine Diffusionssperrschicht, typischerweise auf Nickelbasis vorgesehen sein.

Weitere Merkmale, Einzelheiten und Vorteile der Erfindung ergeben sich aus den beigefügten Patentansprüchen und aus der zeichnerischen Darstellung und nachfolgenden Beschreibung einer bevorzugten Ausführungsform der Erfindung.

In der Zeichnung zeigt:
Figur 1 eine schematische Schnittansicht eines erfindungsgemäßen Gleitlagerverbundwerkstoffs,
Figur 2 das Ergebnis von Härtemessungen im Anschluss an eine Umformbehandlung und
Figur 3 das Ergebnis von Härtemessungen im Anschluss an eine Wärmebehandlung.

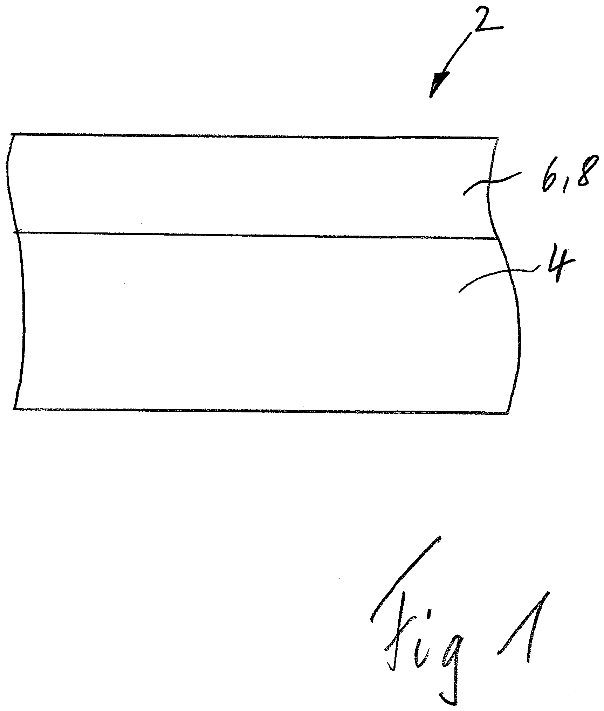

Figur 1 zeigt eine schematische Schnittansicht eines insgesamt mit dem Bezugszeichen 2 bezeichneten Gleitlagerverbundwerkstoffs.

Der Gleitlagerverbundwerkstoff 2 umfasst eine metallische Stützschicht 4, typischerweise aus Stahl, und eine Lagermetallschicht 6 auf Kupfer-Zinn-Basis, also aus Bronze. Die Lagermetallschicht 6 ist vorzugsweise eine Sinterschicht 8. Sie ist gebildet aus einer Lagerlegierung mit 2 bis 6 Gew.-% Zinn und 0,2 bis 2 Gew.-% Nickel. Bevorzugte Legierungszusammensetzungen ergeben sich aus den eingangs gemachten Ausführungen. Eine bevorzugte Legierung ist CuSn4,5Zn0,8Ni0,6Ag0,4.

Die Sinterschicht 8 ist aus sphärischen bis knollenförmigen Legierungspartikeln gebildet, die miteinander "dichtgesintert" sind, so dass die Sinterschicht nur eine Porosität von vorzugsweise höchstens 1 % aufweist. Sie unterscheidet sich daher grundlegend von einer dreidimensional porösen Trägerschicht zur Aufnahme und Verklammerung eines zusätzlichen Gleitschichtmaterials auf Polymerbasis. Die Sinterschicht 8 bildet vielmehr eine rein metallische Lagermetallschicht 6.

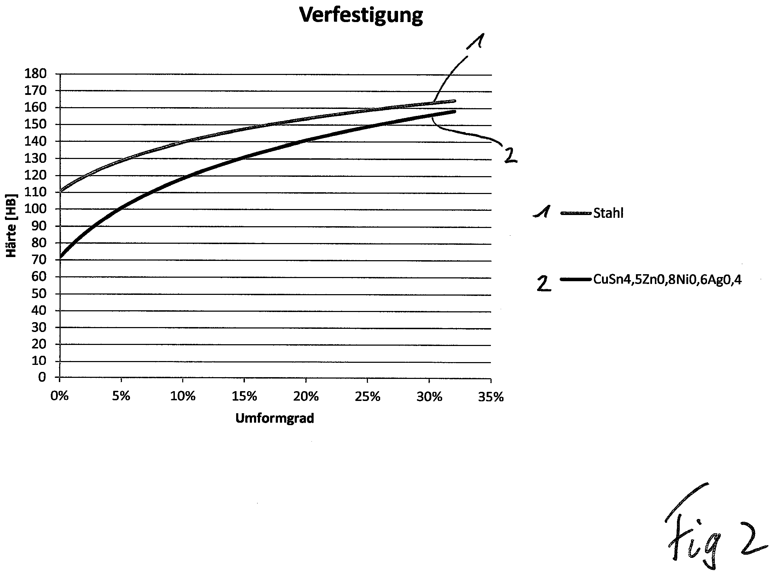

Figur 2 zeigt die Verfestigung einer Stützschicht aus Stahl und einer erfindungsgemäßen Lagermetallschicht im Zuge einer Umformbehandlung durch Walzen im Anschluss an die Herstellung des Schichtverbunds.

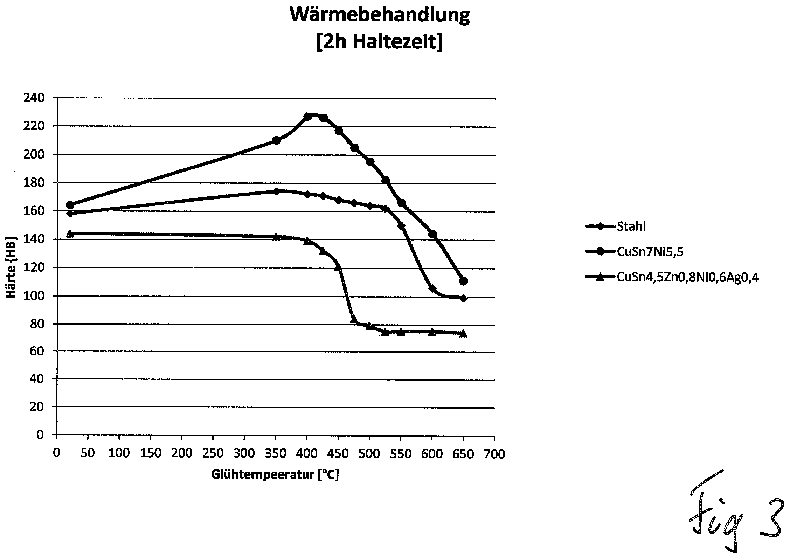

Figur 3 zeigt den Einfluss einer Wärmebehandlung auf die Härte einer Stahlschicht sowie auf eine vorbekannte Lagermetallschicht der Zusammensetzung CuSn7Ni5,5 und einer erfindungsgemäßen Zusammensetzung CuSn4,5Zn0,8Ni0,6Ag0,4. Man erkennt, dass eine Wärmebehandlung bei solchen Lagermetallschichten mit hohem Zinn- und Nickelgehalt bis zu Temperaturen von gut 425° zu einer weiteren Aufhärtung führt, die erst bei sehr hohen Temperaturen, bei denen auch die Stahlhärte wieder in unerwünschter Weise abnimmt, zurückgefahren werden kann. Bei der erfindungsgemäßen Zusammensetzung der Lagermetallschicht kann deren auch umformungsbedingte Aufhärtung, die aber weit unter der Härte von hochlegierten Lagermetallschichten liegt, durch eine Wärmebehandlung bei verhältnismäßig moderaten Temperaturen abgesenkt werden kann. Dies bringt den Vorteil mit sich, dass bei diesen moderaten Temperaturen die erwünschte hohe Härte der Stützschicht nahezu beibehalten werden kann.

Schon bei einem sehr geringen Nickelgehalt von nur 0,6 Gew.-% lässt sich die Bruchdehnung eines Prüflings aus dieser Legierung CuSn4,5Zn0,8Ni0,6Ag0,4 (nach einer Wärmebehandlung bei 500°C und ohne Stützschicht gemessen) um einen Faktor von 2 bis 3 gegenüber einer CuSn4,5Ag0,4 oder einer CuSn4,5Zn0,8Ag0,4 erhöhen, was gleichermaßen ein Maß für eine hohe Einbettungsfähigkeit von Fremdpartikeln und herabgesetzter Kerbwirkung ist.

Der erfindungsgemäße Gleitlagerverbundwerkstoff und hieraus hergestellte Gleitlagerelemente zeichnen sich daher durch ein hohes Maß an Anpassbarkeit und Partikelverträglichkeit aus; sie sind bei hohen Gleitgeschwindigkeiten, wie sie beispielsweise Kurbelwellenlagerschalen oder Pleuellagerschalen auftreten, geeignet einsetzbar.

## Patentansprüche

1. Metallischer Gleitlagerverbundwerkstoff (2) mit einer metallischen Stützschicht (4), insbesondere aus Stahl, und mit einer Lagermetallschicht (6) auf Kupfer-Zinn-Basis mit 2 - 6 Gew.-% Zinn, wobei die Lagermetallschicht 0,2 - 2 Gew.-% Nickel umfasst und der Zinngehalt wenigstens das Dreifache des Nickelgehalts beträgt, **dadurch gekennzeichnet, dass** die Lagermetallschicht (6) zusätzlich 0,4 - 1,5 Gew.-% Zink und 0,2 - 1 Gew.-% Silber umfasst.

2. Gleitlagerverbundwerkstoff, nach Anspruch 1 **dadurch gekennzeichnet, dass** der Zinngehalt wenigstens das Vierfache des Nickelgehalts beträgt.

3. Gleitlagerverbundwerkstoff nach Anspruch 1 oder 2, **dadurch gekennzeichnet, dass** die Lagermetallschicht (6) 0,2 - 1,5 Gew.-%, insbesondere 0,2 - 1,0 Gew.-%, insbesondere 0,2 - 0,9 Gew.-%, insbesondere 0,4 - 0,9 Gew.-%, insbesondere 0,4 - 0,8 Gew.-% Nickel umfasst.

4. Gleitlagerverbundwerkstoff nach Anspruch 1, 2, oder 3, **dadurch gekennzeichnet, dass** die Lagermetallschicht (6) 2,0 - 5,5 Gew.-%, insbesondere 3,0 - 5,5 Gew.-%, insbesondere 3,5 - 5,5 Gew.-%, insbesondere 3,5 - 5,0 Gew.-% und weiter insbesondere 4,0 - 5,0 Gew.-% Zinn umfasst.

5. Gleitlagerverbundwerkstoff nach einem oder mehreren der vorstehenden Ansprüche, **dadurch gekennzeichnet, dass** die Lagermetallschicht (6) von einer CuSn4,5Zn0,8Ni0,6Ag0,4-Legierung gebildet ist.

6. Gleitlagerverbundwerkstoff nach einem oder mehreren der vorstehenden Ansprüche, **dadurch gekennzeichnet, dass** die Lagermetallschicht (6) eine Sinterschicht (8) ist und aus sphärischen bis knollenförmigen Partikeln gebildet ist.

7. Gleitlagerverbundwerkstoff nach Anspruch 7, **dadurch gekennzeichnet, dass** die Porosität der Lagermetallschicht (6) höchstens 2 %, insbesondere höchstens 1 % beträgt.

8. Gleitlagerverbundwerkstoff nach einem oder mehreren der vorstehenden Ansprüche, **dadurch gekennzeichnet, dass** nach der Herstellung des Schichtverbunds eine Umformbehandlung durch Walzen und daran anschließend eine Wärmebehandlung zwischen 450° und 520°C ausgeführt wird.

9. Gleitlagerverbundwerkstoff nach Anspruch 8, **dadurch gekennzeichnet, dass** nach der Wärmebehandlung die Härte der Lagermetallschicht (6) zwischen 70 HBW 1/10/10 und 100 HBW 1/10/10 liegt.

10. Gleitlagerelement für motorische oder motorennahe Anwendungen, insbesondere Hauptlagerschale oder Pleuellagerschale, hergestellt aus einem Gleitlagerverbundwerkstoff nach einem oder mehreren der vorstehenden Ansprüche.

11. Gleitlagerelement nach Anspruch 10, **dadurch gekennzeichnet, dass** nach der Formgebung des Gleitlagerverbundwerkstoffs zur Bildung des Gleitlagerelements die Härte der Lagermetallschicht (6) höchstens 160 HBW 1/10/10, insbesondere höchstens 150 HBW 1/10/10, insbesondere höchstens 140 HBW 1/10/10, insbesondere höchstens 130 HBW 1/10/10 und wenigstens 100 HBW 1/10/10, insbesondere wenigstens 110 HBW 1/10/10 beträgt.

12. Gleitlagerelement nach Anspruch 10 oder 11, **dadurch gekennzeichnet, dass** auf der dem Gleitpartner zugewandten Seite der Lagermetallschicht eine zusätzliche Beschichtung vorgesehen ist in Form einer Sputterschicht auf Aluminiumbasis, insbesondere Aluminium-Zinn-Basis, oder auf Zinn- oder Zinn-Kupferbasis oder auf Wismut- oder Wismutbasis, oder in Form einer galvanischen Beschichtung auf Zinn- oder Zinn-Kupferbasis oder Wismut- oder Wismutbasis oder in Form eines Gleitlacks auf Polymerbasis, insbesondere PAI, insbesondere mit weiteren tribologisch wirksamen Füllstoffen, wie Graphit, MoS₂, TiO₂, ZnS, hexagonales Bohrnitrid.

## Claims

1. Metallic sliding bearing composite material (2) comprising a metallic support layer (4), in particular of steel, and a bearing metal layer (6) on a copper-tin basis with 2-6 weight % of tin, wherein the bearing metal layer comprises 0.2 to 2 weight % of nickel and wherein the tin content is at least three times the nickel content, **characterized in, that** the bearing metal layer (6) additionally comprises 0.4 to 1.5 weight % of zinc and 0.2 to 1 weight % of silver.

2. Sliding bearing composite material, **characterized in that** the tin content is at least four times the nickel content.

3. Sliding bearing composite material according to claim 1 or 2, **characterized in that** the bearing metal layer (6) comprises 0.2 to 1.5 weight %, in particular 0.2 to 1.0 weight %, in particular 0.2 to 0.9 weight %, in particular 0.4 to 0.9 weight %, in particular 0.4 to 0.8 weight % of nickel.

4. Sliding bearing composite material according to claim 1, 2 or 3, **characterized in that** the bearing metal layer (6) comprises 2.0 to 5.5 weight %, in particular 3.0 to 5.5 weight %, in particular 3.5 to 5.5 weight %, in particular 3.5 to 5.0 weight % and moreover, in particular 4.0 to 5.0 weight % of tin.

5. Sliding bearing composite material according to any one or more of the preceding claims, **characterized in that** the bearing metal layer (6) is formed by a CuSn4.5Zn0.8Ni0.6Ag0.4 alloy.

6. Sliding bearing composite material according to any one or more of the preceding claims, **characterized in that** the bearing metal layer (6) is a sinter layer (8) that is formed from spherical to bulb-shaped particles.

7. Sliding bearing composite material according to claim 6, **characterized in that** the porosity of the bearing metal layer (6) is at most 2 %, advantageously at most 1%.

8. Sliding bearing composite material according to any one or more of the preceding claims, **characterized in that** the production of the layer composite is followed by reshaping through rolling and subsequent thereto by heat treatment between 450° and 520°.

9. Sliding bearing composite material according to claim 8, **characterized in that** the hardness of the bearing metal layer (6) is between 70 HBW 1/10/10 and 100 HBW 1/10/10 after heat treatment.

10. Sliding bearing element for applications in or close to the motor, in particular a main bearing shell or a connecting rod bearing shell, produced from a sliding bearing composite material in accordance with one or more of the preceding claims.

11. Sliding bearing element according to claim 10, **characterized in that** the hardness of the bearing metal layer (6) is at most 160 HBW 1/10/10, in particular at most 150 HBW 1/10/10, in particular at most 140 HBW 1/10/10, in particular at most 130 HBW 1/10/10 and at least 100 HBW 1/10/10, in particular at least 110 HBW 1/10/10 after shaping of the composite material for a sliding bearing for forming the sliding bearing element.

12. Sliding bearing element according to claim 10 or 11, **characterized in that** an additional coating is provided on the side of the bearing metal layer facing the sliding partner in the form of a sputtered layer on the basis of aluminum, in particular, on the basis of aluminum-tin, or on the basis of tin or tin-copper, or of bismuth or on the basis of bismuth, or in the form of a galvanic coating on the basis of tin or tin-copper or of bismuth or on the basis of bismuth, or in the form of a sliding lacquer on the basis of polymers, in particular PAI, in particular with further tribologically effective fillers such as graphite, MoS₂, TiO₂, ZnS, hexagonal boron nitride.

## Revendications

1. Matériau composite métallique pour palier à glissement (2) comprenant une couche de support métallique (4), en particulier en acier, et une couche en métal antifriction (6) à base de cuivre et d'étain contenant entre 2 et 6 % en poids d'étain, dans lequel la couche en métal antifriction comprend entre 0,2 et 2 % en poids de nickel et la teneur en étain est au moins trois fois la teneur en nickel, **caractérisé par le fait que** la couche en métal antifriction (6) comprend en sus entre 0,4 et 1,5 % en poids de zinc et entre 0,2 et 1 % en poids d'argent.

2. Matériau composite pour palier à glissement selon la revendication 1, **caractérisé par le fait que** la teneur en étain est au moins quatre fois la teneur en nickel.

3. Matériau composite pour palier à glissement selon la revendication 1 ou 2, **caractérisé par le fait que** la couche en métal antifriction (6) comprend entre 0,2 et 1,5 % en poids, en particulier entre 0,2 et 1,0 % en poids, en particulier entre 0,2 et 0,9 % en poids, en particulier entre 0,4 et 0,9 % en poids, en particulier entre 0,4 et 0,8 % en poids de nickel.

4. Matériau composite pour palier à glissement selon la revendication 1, 2 ou 3, **caractérisé par le fait que** la couche en métal antifriction (6) comprend entre 2,0 et 5,5 % en poids, en particulier entre 3,0 et 5,5 % en poids, en particulier entre 3,5 et 5,5 % en poids, en particulier entre 3,5 et 5,0 % en poids et plus particulièrement entre 4,0 et 5,0 % en poids d'étain.

5. Matériau composite pour palier à glissement selon l'une ou plusieurs des revendications précédentes, **caractérisé par le fait que** la couche en métal antifriction (6) est formée par un alliage de CuSn4, 5Zn0, 8Ni0, 6Ag0,4.

6. Matériau composite pour palier à glissement selon l'une ou plusieurs des revendications précédentes, **caractérisé par le fait que** la couche en métal antifriction (6) est une couche frittée (8) et est formée à partir de particules sphériques à tubériformes.

7. Matériau composite pour palier à glissement selon la revendication 6, **caractérisé par le fait que** la porosité de la couche en métal antifriction (6) est de 2 % tout au plus, en particulier de 1 % tout au plus.

8. Matériau composite pour palier à glissement selon l'une ou plusieurs des revendications précédentes, **caractérisé par le fait que**, après la fabrication du composite stratifié, on met en oeuvre un traitement de formage par laminage et par la suite un traitement thermique entre 450° et 520°C.

9. Matériau composite pour palier à glissement selon la revendication 8, **caractérisé par le fait que**, après le traitement thermique, la dureté de la couche en métal antifriction (6) est comprise entre 70 HBW 1/10/10 et 100 HBW 1/10/10.

10. Elément de palier à glissement pour des applications dans un moteur ou à proximité d'un moteur, en particulier coussinet de palier principal ou coussinet de bielle, fabriqué à partir d'un matériau composite pour palier à glissement selon l'une ou plusieurs des revendications précédentes.

11. Elément de palier à glissement selon la revendication 10, **caractérisé par le fait que**, après la conformation du matériau composite pour palier à glissement pour former ledit élément de palier à glissement, la dureté de la couche en métal antifriction (6) est de 160 HBW 1/10/10 tout au plus, en particulier de 150 HBW 1/10/10 tout au plus, en particulier de 140 HBW 1/10/10 tout au plus, en particulier de 130 HBW 1/10/10 tout au plus et d'au moins 100 HBW 1/10/10, en particulier d'au moins 110 HBW 1/10/10.

12. Elément de palier à glissement selon la revendication 10 ou 11, **caractérisé par le fait que** sur la face de la couche en métal antifriction, qui montre vers le partenaire de glissement, est prévu un revêtement supplémentaire sous la forme d'une couche à base d'aluminium déposée par pulvérisation cathodique, en particulier à base d'aluminium et d'étain ou à base d'étain ou d'étain et de cuivre ou à base de bismuth, ou sous la forme d'un revêtement galvanique à base d'étain ou d'étain et de cuivre ou à base de bismuth ou sous la forme d'un vernis de glissement à base de polymère, en particulier de PAI, en particulier avec d'autres charges tribologiquement actives, telles que le graphite, le MoS₂, le Ti0₂, le ZnS, le nitrure de bore hexagonal.
